Europäisches Patentamt

European Patent Office

Office européen des brevets

(19)

(11) Numéro de publication : **0 128 094**
**B1**

(12) **FASCICULE DE BREVET EUROPÉEN**

(45) Date de publication du fascicule du brevet :
07.05.86

(51) Int. Cl.⁴ : **B 01 D 46/24**, F 02 M 35/024

(21) Numéro de dépôt : **84401122.1**

(22) Date de dépôt : **30.05.84**

(54) Filtre perfectionné, notamment filtre à air pour moteur à combustion interne.

(30) Priorité : 02.06.83 FR 8309195

(43) Date de publication de la demande :
12.12.84 Bulletin 84/50

(45) Mention de la délivrance du brevet :
07.05.86 Bulletin 86/19

(84) Etats contractants désignés :
DE GB IT SE

(56) Documents cités :
DE-A- 2 359 221
FR-A- 2 105 587
GB-A-  816 520

(73) Titulaire : **ACIERS ET OUTILLAGE PEUGEOT Société dite:**

**F-25400 Audincourt (Doubs) (FR)**

(72) Inventeur : **Virgille, Jacques**
**14 Avenue Courbet**
**F-25230 Seloncourt (FR)**
Inventeur : **Jodry, François**
**Thulay**
**F-25310 Herimoncourt (FR)**
Inventeur : **Juglair, Antoine**
**86 bis Rue du Vernois**
**F-25700 Valentigney (FR)**

(74) Mandataire : **Moncheny, Michel et al**
**c/o Cabinet Lavoix 2 Place d'Estienne d'Orves**
**F-75441 Paris Cedex 09 (FR)**

## Description

La présente invention est relative aux filtres destinés à traiter un écoulement gazeux et elle concerne plus particulièrement les filtres à air pour moteurs à combustion interne.

Les filtres à air connus dans l'industrie automobile en particulier comportent en général une enveloppe délimitant une chambre de filtrage avec des ouvertures dont l'une est l'entrée et dont l'autre est la sortie, ces ouvertures communiquant l'une avec l'autre à travers une cartouche filtrante, en une matière souple, ce filtre comprenant en outre des moyens destinés à soutenir ladite cartouche pour en conserver l'intégrité de forme. Dans la plupart des cas, les moyens de soutien de la cartouche filtrante, qui peut être en mousse de polyuréthane à cellule ouverte, sont formés par une grille indépendante en métal ou en matière plastique, qui vient soutenir la cartouche pour en éviter la déformation au cours du fonctionnement du filtre. Dans d'autres cas, lesdits moyens sont formés par une cage consistant, par exemple, en deux collerettes reliées entre elles par des entretoises (brevets FR-A-2 105 587 et DE-A-2 359 221). On sait que des contraintes assez sévères sont imposées à ces cartouches si elles sont employées dans les filtres à air pour moteurs à combustion interne en raison notamment du débit d'air saccadé avec lequel un tel moteur est alimenté. Des moyens de soutien de la cartouche sont donc indispensables.

Or, outre le fait d'être perdables, les grilles actuellement employées en matière plastique ont l'inconvénient de mal se prêter au moulage car il faut dans le moule autant de noyaux éclipsables qu'il y a de trous dans la grille, étant entendu que celle-ci présente une forme générale cylindrique, ou (cas de la forme en cage) le moulage est compliqué par une forme géométrique composite.

L'invention a pour but essentiel d'éviter ces deux inconvénients de la technique antérieure et de fournir un filtre dans lequel les moyens de soutien soient imperdables et facilement moulables.

L'invention a donc pour objet un filtre notamment pour le filtrage de l'air de combustion d'un moteur à combustion interne, comprenant une enveloppe délimitant une chambre de filtrage avec des ouvertures dont l'une est l'entrée et dont l'autre est la sortie, ces ouvertures communiquant l'une avec l'autre à travers une cartouche filtrante en une matière souple, ce filtre comprenant en outre des moyens destinés à soutenir ladite cartouche pour en conserver l'intégrité de forme, caractérisé en ce que lesdits moyens de soutien comprennent une série de tiges parallèles les unes aux autres et à l'axe de la cartouche, contre lesquelles est maintenue ladite cartouche et qui sont venues de matière avec ladite enveloppe.

Un tel filtre peut facilement être démoulé, en raison de la forme et de la disposition des tiges de soutien qui en étant d'une seule pièce avec le corps de filtre sont imperdables.

D'autres formes de réalisation avantageuses de la présente invention sont exposées dans les revendications dépendantes.

L'invention sera mieux comprise à l'aide de la description qui va suivre, donnée uniquement à titre d'exemple et faite en se référant aux dessins annexés, sur lesquels :

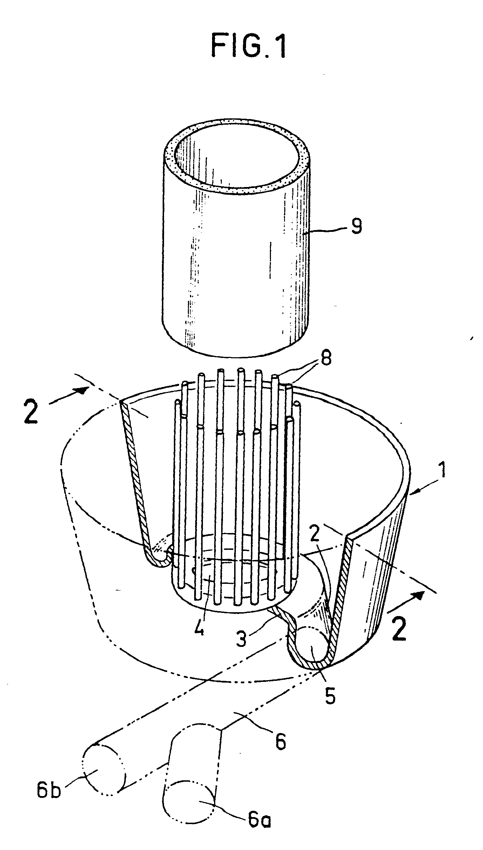

la Figure 1 est une vue partielle et une coupe d'un filtre suivant l'invention, dépourvu de couvercle, une cartouche filtrante étant montrée juste avant sa mise en place ;

la Figure 2 est une vue en élévation et en coupe axiale suivant la ligne 2-2 de la Fig. 1 ;

la Figure 3 est une vue en plan du filtre à air avant le montage du couvercle ;

la Figure 4 est une vue en élévation et en coupe, du filtre à air suivant l'invention.

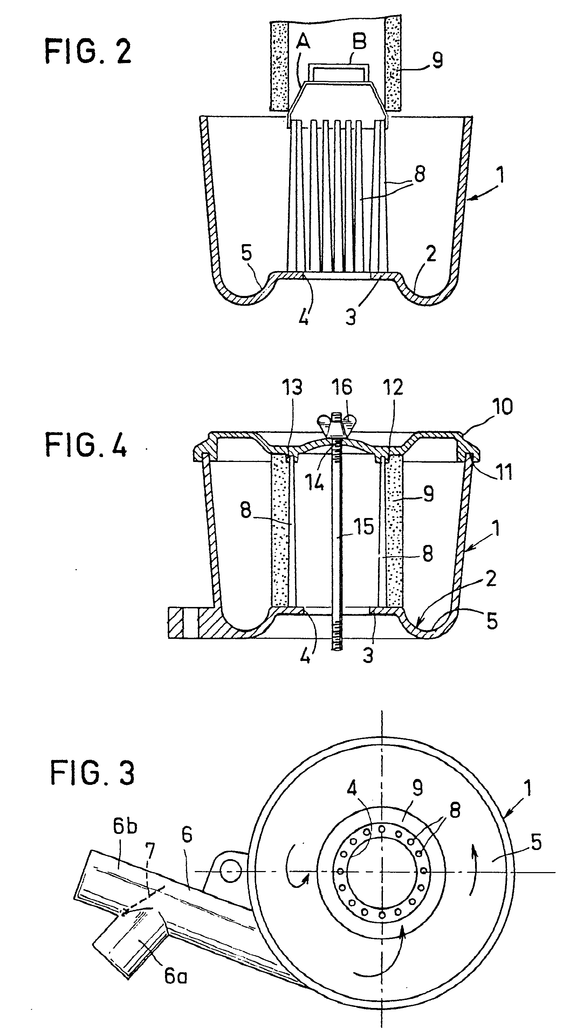

Suivant l'exemple de réalisation représenté aux figures, le filtre est destiné à être utilisé en tant que filtre à air d'un moteur à combustion interne. Il comporte un corps 1 dont la forme s'apparente à une coupelle à paroi légèrement évasée. Le fond 2 de cette coupelle présente une partie centrale surélevée 3 percée d'une ouverture circulaire 4 de sortie d'air, et cette partie surélevée est entourée d'une gorge annulaire 5 à laquelle se raccorde tangentiellement une tubulure 6... d'entrée d'air. Cette tubulure se termine à son extrémité libre par deux embouts 6a et 6b, l'un pour l'entrée d'air chaud et l'autre pour l'entrée d'air froid, un volet thermostatique 7 (Fig. 3), connu en soi, pouvant être prévu pour la régulation de la température de l'air circulant dans le filtre. Autour de la circonférence de l'ouverture 4 est prévue une série de tiges de soutien 8 s'étendant parallèlement les unes aux autres et à l'axe du corps de filtre 1 à partir de la partie surélevée 3. Chaque tige présente une forme légèrement conique, et est de section circulaire, toute autre forme appropriée pouvant cependant être prévue. Les tiges 8 sont destinées à soutenir une cartouche filtrante 9 en mousse de polyuréthane à cellules ouvertes par exemple ou en polypropylène. Le nombre des tiges de soutien est choisi de telle manière que la cartouche filtrante maintienne son intégrité de forme dans toutes les conditions de circulation de l'air.

La Fig. 4 montre que le filtre suivant l'invention comporte également un couvercle 10 qui présente une gorge périphérique 11 s'adaptant sur le rebord de la paroi latérale de la coupelle 1, une nervure annulaire coaxiale 12 pourvue d'une rainure annulaire 13 et un trou central 14. Ce dernier est destiné à être traversé par une tige filetée 15 s'étendant à travers le corps de filtre 1 et fixée d'une façon connue en soi dans un carburateur (non représenté) coiffé par le filtre à air.

La rainure annulaire 13 qui présente le même diamètre que le cercle primitif selon lequel sont disposées les tiges de soutien 8 est destinée à recevoir les extrémités libres de celles-ci lorsque le couvercle 10 est en place sur le corps de filtre 1.

Ce couvercle est maintenu en position par un écrou à oreilles 16. Il est à noter que la longueur de la cartouche filtrante est choisie de préférence un peu supérieure à la distance entre le couvercle et la partie surélevée 3 du fond 2 pour éviter tout écoulement parasitaire aux extrémités de la cartouche.

Avantageusement, le corps de filtre 1 ainsi que la couronne de tiges de soutien 8 sont venus de moulage de préférence à partir d'une matière plastique appropriée. Le couvercle peut être réalisé en la même matière. D'ailleurs, la forme du corps de filtre et des tiges est telle que le démoulage en est facilité, les tiges pouvant servir pour l'éjection du corps hors du moule. En outre, les tiges de soutien améliorent le passage de l'air par diminution des pertes de charge, car elles réduisent au minimum la surface s'opposant à la circulation de l'air par comparaison aux grilles classiques utilisées dans la technique antérieure.

La Fig. 3 représente par des flèches la circulation de l'air dans le corps de filtre. Toutefois, il est possible d'inverser cette circulation d'air, ou en d'autres termes de faire traverser la cartouche filtrante en sens inverse, si l'implantation du filtre près du moteur thermique l'exige. Dans ce cas, la tubulure 6 ne comporte naturellement pas de dispositif de mélange thermostatique.

La Fig. 2 montre comment la cartouche filtrante peut commodément être placée sur la série de tiges de soutien. A cet effet, un outil A, en forme de coupelle, dont le diamètre d'ouverture est égal au diamètre de la surface enveloppe de la couronne de tiges, est placé en position inversé sur celles-ci ce qui permet de faire glisser la cartouche sur les tiges. L'outil comporte de préférence une poignée B. Il peut être utilisé soit en première monte, soit par le garagiste lors du remplacement de la cartouche. A cet égard, il est à noter que ce remplacement n'implique que la mise en place de la cartouche contrairement à la technique antérieure, dans laquelle généralement le démontage de la cartouche nécessite celui de la grille de soutien d'où un risque d'oubli ou de perte.

Enfin, selon une variante qui n'a pas été représentée aux dessins, les tiges de soutien, au lieu d'être venues de moulage avec le corps de filtre, peuvent l'être avec le couvercle.

## Revendications

1. Filtre notamment pour le filtrage de l'air de combustion d'un moteur à combustion interne, comprenant une enveloppe (1, 10) délimitant une chambre de filtrage avec des ouvertures dont l'une est l'entrée (6) et dont l'autre (4) est la sortie, ces ouvertures communiquant l'une avec l'autre à travers une cartouche filtrante (9) en une matière souple, ce filtre comprenant en outre des moyens (8) destinés à soutenir ladite cartouche pour en conserver l'intégrité de forme, caractérisé en ce que lesdits moyens de soutien comprennent une série de tiges (8) parallèles les unes aux autres et à l'axe de la cartouche (9) contre lesquelles est maintenue ladite cartouche (9) et qui sont venues de matière avec ladite enveloppe (1, 10).

2. Filtre suivant la revendication 1, caractérisé en ce que chaque tige est venue de matière avec ladite enveloppe (1, 10) par l'une de ses extrémités.

3. Filtre suivant l'une quelconque des revendications 1 et 2, dans lequel la cartouche filtrante (9) présente une forme générale cylindrique ouverte à ses deux extrémités, caractérisé en ce que lesdites tiges (8) sont disposées sur une courbe formée autour de l'une des ouvertures de l'enveloppe (1, 10).

4. Filtre suivant la revendication 3, caractérisé en ce que les tiges (8) sont disposées sur un cercle.

5. Filtre suivant l'une quelconque des revendications 3 et 4, caractérisé en ce que la section transversale de chaque tige (8) est arrondie et présente une aire qui décroît de l'extrémité qui est venue de matière avec l'enveloppe (1, 10) vers son extrémité libre.

6. Filtre suivant l'une quelconque des revendications 4 et 5, dans lequel son enveloppe (1, 10) présente la forme générale d'une coupelle (1) à paroi évasée, coiffée par un couvercle (10), caractérisé en ce que ladite série de tiges (8) est disposée coaxialement sur le fond (2) de ladite coupelle (1) en étant venue de matière avec celle-ci.

7. Filtre suivant la revendication 6, caractérisé en ce que l'ouverture (4) autour de laquelle sont prévues lesdites tiges est l'ouverture de sortie du filtre.

8. Filtre suivant la revendication 7, caractérisé en ce que le fond (2) de ladite coupelle (1) présente une partie surélevée (3) entourée d'une gorge annulaire (5) dans laquelle débouche tangentiellement une tubulure (6) qui forme l'ouverture d'entrée du filtre.

9. Filtre suivant l'une quelconque des revendications 6 à 8, caractérisé en ce que son couvercle (10) présente sur sa face intérieure une nervure annulaire (12) dans laquelle est pratiquée une rainure annulaire (13) destinée à recevoir les extrémités libres desdites tiges (8), lorsque le couvercle (10) est mis en place.

10. Filtre suivant l'une quelconque des revendications 4 et 5, dans lequel son enveloppe présente la forme générale d'une coupelle (1) à paroi évasée, coiffée par un couvercle (10), caractérisé en ce que ladite série de tiges (8) est disposée coaxialement dans ladite coupelle (1), en étant venues de matière avec ledit couvercle (10).

## Claims

1. A filter, in particular for filtering combustion air of an internal combustion engine, comprising a case (1, 10) defining a filtering chamber provided with openings one of which is an inlet (6) and the other (4) is an outlet, one of these openings communicating with the other through a filtering cartridge (9) of a flexible material, this filter further comprising means (8) for supporting said cartridge so that it preserves the integrity of its shape, characterised in that said supporting means comprise a series of rods (8) which are parallel to each other and to the axis of the cartridge (9) against which rods said cartridge (9) is maintained, said rods being in one integral piece with said case (1, 10).

2. A filter according to claim 1, characterised in that each rod is in one integral piece with said case (1, 10) at one of its ends.

3. A filter according to claim 1 or 2, in which the filtering cartridge (9) has a generally cylindrical shape open at both ends, characterised in that said rods (8) are disposed on a curve formed around one of the openings of the case (1, 10).

4. A filter according to claim 3, characterised in that the rods (8) are disposed on a circle.

5. A filter according to any one of the claims 3 and 4, characterised in that the cross-section of each rod (8) is rounded and has an area which decreases in a direction from the end which is in one integral piece with the case (1, 10) to its free end.

6. A filter according to any one of the claims 4 and 5, in which its case (1, 10) has the general shape of a cup (1) having a divergent wall, capped by a cover (10), characterised in that said series of rods (8) is disposed coaxially on the bottom (2) of said cup (1) and are in one integral piece with the latter.

7. A filter according to claim 6, characterised in that the opening (4) around which said rods are provided is the outlet opening of the filter.

8. A filter according to claim 7, characterised in that the bottom (2) of said cup (1) has a raised part (3) surrounded by an annular groove (5) onto which opens tangentially a pipe (6) which forms the inlet opening of the filter.

9. A filter according to any one of the claims 6 to 8, characterised in that its cover (10) has on its interior side an annular rib (12) in which is formed an annular groove (13) adapted to receive the free ends of said rods (8) when the cover (10) is placed in position.

10. A filter according to any one of the claims 4 and 5, in which its case has the general shape of a cup (1) having a divergent wall, capped by a cover (10), characterised in that said series of rods (8) is disposed coaxially in said cup (1) and are in one integral piece with said cover (10).

**Patentansprüche**

1. Filter, insbesondere zur Filterung der Verbrennungsluft einer Brennkraftmaschine, mit einem Gehäuse (1, 10), das eine Filterkammer mit Öffnungen begrenzt, von denen die eine der Einlaß und die andere der Auslaß ist, wobei diese Öffnungen über eine Filterpatrone (9) aus biegsamen Material miteinander in Verbindung steht, wobei dieser Filter außerdem Mittel (8) aufweist, die zum Stützen der Patrone dienen, um die Unversehrtheit ihrer Form zu gewährleisten, dadurch gekennzeichnet, daß die Haltemittel eine Reihe von Stäben (8) aufweisen, die zueinander und zur Achse der Patrone (9) parallel sind, an denen die Patrone gehalten ist und die mit dem Gehäuse (1, 10) einstückig ausgebildet sind.

2. Filter nach Anspruch 1, dadurch gekennzeichnet, daß jede Stange an einem ihrer Enden mit dem Gehäuse (1, 10) einstückig ausgebildet ist.

3. Filter nach einem der Ansprüche 1 und 2, bei dem die Filterpatrone (9) eine allgemeine zylindrische, an ihren beiden Enden offene Form hat, dadurch gekennzeichnet, daß die Stäbe (8) auf einer um die eine der Öffnungen des Gehäuses (1, 10) gebildeten Kurve angeordnet sind.

4. Filter nach Anspruch 3, dadurch gekennzeichnet, daß die Stäbe (8) auf einem Kreis angeordnet sind.

5. Filter nach einem der Ansprüche 3 und 4, dadurch gekennzeichnet, daß der Querschnitt jedes Stabs (8) rund ist und einen Flächeninhalt aufweist, der von dem mit dem Gehäuse (1, 10) einstückig ausgebildeten Ende bis zu seinem freien Ende abnimmt.

6. Filter nach einem der Ansprüche 4 und 5, dessen Mantel (1, 10) die allgemeine Form einer Glocke (1) mit erweiterter Wand aufweist, die von einem Deckel (10) bedeckt ist, dadurch gekennzeichnet, daß die Reihe von Stäben (8) koaxial am Boden (2) der Glocke angeordnet und mit dieser einstückig ausgebildet ist.

7. Filter nach Anspruch 6, dadurch gekennzeichnet, daß die Öffnung (4), um die die Stangen angeordnet sind, die Auslaßöffnung des Filters ist.

8. Filter nach Anspruch 7, dadurch gekennzeichnet, daß der Boden (2) der Glocke (1) einen erhabenen Teil (3) aufweist, der von einer Ringnut (5) umgeben ist, in die eine Rohrleitung (6) tangential mündet, die die Einlaßöffnung des Filters bildet.

9. Filter nach einem der Ansprüche 6 bis 8, dadurch gekennzeichnet, daß sein Deckel (10) auf seiner Innenfläche eine ringförmige Rippe (12) aufweist, in der eine Ringnut (13) ausgebildet ist, die zur Aufnahme der freien Enden der Stäbe (8) dient, wenn der Deckel (10) angebracht ist.

10. Filter nach einem der Ansprüche 4 und 5, dessen Gehäuse die allgemeine Form einer Glocke (11) mit erweiterter Wand aufweist und die von einem Deckel (10) bedeckt ist, dadurch gekennzeichnet, daß die Reihe von Stäben (8) in der Glocke (1) koaxial angeordnet und mit dem Deckel (10) einstückig ausgebildet ist.

# FIG.1

FIG. 2

FIG. 4

FIG. 3

2